# FASCICULE DE BREVET EUROPEEN

(11) **EP 4 005 744 B1**
(45) Date de publication et mention de la délivrance du brevet: **19.07.2023**
(21) Numéro de dépôt: 21210717.1
(22) Date de dépôt: 26.11.2021
(51) Int. Cl.: B25J 9/02, F16M 11/42

(54) **ROBOT CARTESIEN COMPRENANT AU MOINS UN MAILLON, ET MAILLON CORRESPONDANT**
KARTESISCHER ROBOTER MIT MINDESTENS EINEM KETTENGLIED UND ENTSPRECHENDES KETTENGLIED
CARTESIAN ROBOT COMPRISING AT LEAST ONE LINK, AND CORRESPONDING LINK

(30) Priorité: 26.11.2020 FR 2012226
(43) Date de publication de la demande: 01.06.2022
(73) Titulaire: Sepro Robotique, 85003 La Roche-sur-Yon Cedex (FR)
(72) Inventeur: MARSAL, Damien, 85310 NESMY (FR); BOURGET, Antoine, 85170 Le Poiré sur Vie (FR); BONNEFOND, Benjamin, 85190 BEAULIEU SOUS LA ROCHE (FR)
(74) Mandataire: Vidon Brevets & Stratégie

(56) Documents cités:
- EP-A1- 0 295 215
- EP-B1- 0 295 215
- WO-A1-2014/064684

## Description

### Domaine technique

Le domaine de l'invention est celui des robots multiaxes, et plus particulièrement des robots cartésiens, par exemple du type à 5 ou 6 axes, adaptés notamment à l'industrie de la plasturgie, et en particulier à la manipulation de produits délivrés par des presses à injection plastique. Plus particulièrement, l'invention concerne la réalisation de bras de tels robots.

### Art antérieur

Dans le domaine des presses à injection, il est connu d'utiliser des robots capables d'effectuer plusieurs mouvements axiaux et portant un ou plusieurs éléments de préhension munis de ventouses pour saisir et déplacer les objets, ou pièces, moulés par des presses. Ces robots multiaxes comprennent une pluralité de maillons dont certains assurent un déplacement selon un axe ou plusieurs axes donnés. Certains des maillons assurent donc le guidage et le maintien d'un autre maillon ou de l'élément de préhension du robot multiaxes. Un tel robot est par exemple décrit dans le document EP0295215.

Généralement, un maillon est réalisé sous la forme d'un profilé extrudé en aluminium. Ceci est intéressant, en ce qui concerne notamment la répétabilité, l'intégration de fonctions techniques complexes, ou la modularité par exemple.

Cependant, l'aluminium est un matériau relativement souple et peu résistant, comparé à l'acier. Pour obtenir une rigidité acceptable, il est donc nécessaire d'utiliser une quantité importante de matière, conduisant à des coûts élevés. En outre, du fait des frottements sur les zones de roulement des éléments de guidage, la longévité et la fiabilité des maillons en aluminium se retrouvent fortement réduites.

De sorte à pallier ces problèmes, il pourrait être envisagé de réaliser ces maillons en acier. Cependant, la production d'un profilé intégrant des fonctions complexes en acier est peu aisée, voire impossible, et les profilés en acier se limitent généralement à des formes simples, par exemple rectangulaires ou carrées.

Il existe donc un besoin de mettre en oeuvre des robots cartésiens multiaxes comprenant des maillons plus fiables et pérennes que les maillons en aluminium, et moins coûteux que ces derniers.

La combinaison des deux matières pour former un tel maillon est directement écartée par l'homme du métier, du fait de l'effet bilame : cette approche introduirait un fléchissement important et non acceptable du maillon, notamment si celui-ci est de grande longueur, sous un gradient de température : l'aluminium se dilatant plus que l'acier, cela provoquerait un inévitable effet bilame.

Dans d'autres domaines, l'homme du métier a pu envisager de réaliser des ensembles bi-matière, combinant une partie en aluminium et une partie en acier, par exemple dans le domaine des rails de guidage. C'est par exemple le cas du document WO2014064684 qui décrit un système de rail pour guider un chariot, comprenant notamment un corps de rail construit en aluminium présentant des rainures longitudinales le long de ses côtés, recevant des bandes longitudinales de roulement en acier permettant un guidage du rail. Ces bandes longitudinales de roulement sont montées mobiles en translation, avec un degré de liberté de sorte à supprimer les contraintes exercées par le corps en aluminium sur les bandes de roulement. En cas d'augmentation de température, les bandes de roulement peuvent ainsi glisser par rapport au corps du rail de guidage sans dilatation ou déformation thermique.

Bien évidemment, un tel ensemble bi-matière ne peut pas être adapté à un maillon bi-matière de robot cartésien. En effet, un tel maillon n'a pas pour objectif de guider mais de supporter. En d'autres termes, il n'a pas pour objectif d'éviter les contraintes comme peut l'avoir un rail mais a pour objectif d'accepter et supporter les contraintes, ce qui est incompatible avec le degré de liberté prévu, permettant aux bandes de roulement de se déplacer le long du corps du rail. En effet, le fait de prévoir un tel un degré de liberté dans l'ensemble composant ce maillon supprimerait tout effet de support du fait du manque de contraintes exercées par une partie sur une autre, ce qui n'est pas envisageable.

### Exposé de l'invention

Les inventeurs ont cependant passé outre ces *a priori,* et ont recherché une solution permettant de mettre en oeuvre des maillons bi-matière dans des robots cartésiens, assurant une telle fonction de support tout en annulant ou à tout le moins minimisant l'effet bilame, de façon à obtenir un gain économique sans compromis technique. Cette approche n'est en elle-même pas évidente, et s'oppose aux *a priori* de l'homme du métier pour cette application particulière aux robots cartésiens.

Dans ce but, l'invention concerne un robot cartésien comprenant au moins un maillon, ledit maillon étant constitué d'au moins deux éléments réalisés dans deux matériaux différents et solidarisés l'un à l'autre :
- un élément de rigidification, réalisé à partir d'une tôle d'acier pliée ; et
- un élément de maintien et/ou de guidage, réalisé à partir d'un profilé en aluminium extrudé.

Selon l'invention, l'élément de rigidification et l'élément de maintien et/ou de guidage sont solidarisés l'un à l'autre en liaison encastrement à température constante, et au moins un desdits éléments présente une pluralité de déformations locales permettant une dilation ou une contraction d'une ou plusieurs portions de l'un desdits éléments par rapport à l'autre, lorsque la température varie.

En d'autres termes, au moins un des deux éléments présente une pluralité de déformations locales permettant un glissement relatif d'une ou plusieurs portions de l'un des éléments par rapport à l'autre, sous l'effet d'un changement de température.

Par "solidarisés en liaison encastrement à température constante, on entend ici que l'élément de rigidification et l'élément de maintien et/ou de guidage sont liés l'un à l'autre sans possibilité de mouvement relatif à température constante.

En d'autres termes, l'élément de rigidification et l'élément de maintien et/ou de guidage ne présentent aucun degré de liberté l'un par rapport à l'autre, et sont donc fixes l'un par rapport à l'autre à température constante.

En revanche, un glissement relatif de l'un desdits éléments par rapport à l'autre est rendu possible, lorsque la température varie, grâce aux déformations prévues à cet effet, pour permettre l'annulation ou au moins la limitation des contraintes exercées par un desdits éléments sur l'autre, sous l'effet de la dilation ou de la contraction lorsque la température varie au cours du temps (effet bilame).

Ainsi, les deux éléments sont solidaires entre eux, de sorte qu'aucun glissement absolu de l'une des parties par rapport à l'autre ne se produise en utilisation (la température restant inchangée sur une durée courte, et augmentant avec le temps par accumulation de mouvement), les glissements de matières étant essentiellement sinon intégralement la conséquence de la dilatation de la matière de l'une et l'autre des parties en fonction d'une variation de la chaleur.

En d'autres termes, l'élément de rigidification en sa totalité ne glisse pas, c'est-à-dire ne se déplace pas, par rapport à l'élément de maintien et/ou de guidage, et inversement. Seule une portion de l'un desdits éléments subit un glissement relatif par rapport à l'autre desdits éléments en cas de variation de température.

Ainsi, l'invention propose une approche nouvelle et inventive permettant de résoudre au moins en partie certains des inconvénients de l'art antérieur. Cette approche consistant à créer des déformations, et donc potentiellement introduire des fragilités, n'est pas évidente pour l'homme du métier, mais apporte une solution efficace à l'effet bilame.

Plus particulièrement, avec la mise en oeuvre d'au moins un maillon bi-matière dans un robot cartésien multiaxe, dont l'un au moins des éléments présente une pluralité de déformations locales, on s'affranchit ou à tout le moins on réduit des éventuels problèmes de contraintes exercées par un des deux éléments sur l'autre lorsque la température varie.

En effet, avec la mise en oeuvre d'un tel maillon bi-matière, c'est-à-dire comprenant un élément de rigidification en acier plié combiné à un élément de maintien et/ou de guidage en aluminium, dont au moins l'un des deux présente des déformations, les effets de la dilatation de l'un des deux ou des deux éléments se trouvent fortement réduits voire annulés du fait que ce sont les déformations qui vont « absorber » cette dilatation, par exemple en assurant un rétrécissement lorsque l'élément portant ces dilatations subit une augmentation de la température ou un allongement lorsque l'élément portant ces dilatations subit une diminution de la température. Une telle invention va donc offrir au maillon une capacité de dilatation en fonction des variations de température.

Selon un aspect de l'invention, lesdits deux éléments sont assemblés selon un axe principal Y, lesdites déformations peuvent s'étendre sensiblement perpendiculairement audit axe principal Y desdits éléments.

Ceci permet d'absorber de manière efficace les éventuelles dilatations du ou desdits éléments lorsque la température du maillon varie.

Lesdites déformations peuvent notamment comprendre des encoches ou des entailles.

De telles déformations sont relativement simples et donc facile à réaliser, par exemple par des procédés automatisés.

Selon un premier mode de réalisation, au moins certaines desdites déformations sont formées sur ledit élément de maintien et/ou de guidage.

Notamment, les entailles ou encoches peuvent s'étendre sur au moins deux bords et un angle de l'élément de maintien et/ou de guidage.

Dans ce cas, ledit élément de maintien et/ou de guidage peut présenter deux séries de déformations, distribuées respectivement sur chacun des deux côtés de l'éléments.

Selon un autre mode de réalisation de l'invention, au moins certaines des déformations sont formées sur l'élément de rigidification.

Par exemple, lesdites entailles ou encoches sont distribuées à proximité de lumières destinées au passage de vis de solidarisation des deux éléments.

Selon un aspect d'au moins un mode de réalisation de l'invention, ledit élément de rigidification présente une section ouverte, avec :
- une surface de fond ;
- une première surface latérale, perpendiculaire à ladite surface de fond, dont la partie supérieure vient en contact avec une première surface correspondante dudit élément de maintien et/ou de guidage ;
- une deuxième surface latérale, perpendiculaire à ladite surface de fond ;
- une surface supérieure repliée à partir de ladite deuxième surface latérale et s'étendant parallèlement à ladite surface de fond, et venant en contact avec une seconde surface correspondante dudit élément de maintien et/ou de guidage.

Selon un aspect d'au moins un mode de réalisation de l'invention, lesdites déformations sont formées au moins sur ladite partie supérieure de la première surface latérale.

L'invention concerne également un maillon en tant que tel d'un robot cartésien selon l'un des modes de réalisation précités, constitué d'au moins deux éléments réalisés dans deux matériaux différents et solidarisés l'un à l'autre :
- un élément de rigidification, réalisé à partir d'une tôle d'acier pliée ; et
- un élément de maintien et/ou de guidage, réalisé à partir d'un profilé en aluminium extrudé,
l'élément de rigidification et l'élément de maintien et/ou de guidage étant solidarisés l'un à l'autre en liaison encastrement à température constante, au moins un desdits éléments présentant une pluralité de déformations locales permettant une dilation ou une contraction d'une ou plusieurs portions de l'un desdits éléments par rapport à l'autre, lorsque la température varie.

### Présentation des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
[Fig 1] est une vue schématique en coupe illustrant un maillon pour robot cartésien multiaxes selon un premier mode de réalisation ;
[Fig 2] est une vue schématique en perspective illustrant un maillon pour robot cartésien multiaxes selon le mode de réalisation de la figure 1 ;
[Fig 3] est une vue en perspective de dessus et de dessous montrant un élément de maintien et/ou de guidage portant des déformations selon le mode de réalisation de la figure 2 ;
[Fig 4] est une vue montrant en coupe latérale l'élément de maintien et/ou de guidage de la figure 3 ;
[Fig 5] est une vue en perspective de dessus et de dessous montrant un élément de rigidification selon le mode de réalisation de la figure 2 ;
[Fig 6] est une vue montrant en coupe latérale l'élément de maintien et/ou de guidage de la figure 3 ;
[Fig 7] est une vue schématique en coupe illustrant un maillon pour robot cartésien multiaxes selon un deuxième mode de réalisation ;
[Fig 8] est une vue schématique en perspective illustrant un maillon pour robot cartésien multiaxes selon le mode de réalisation de la figure 7 ;

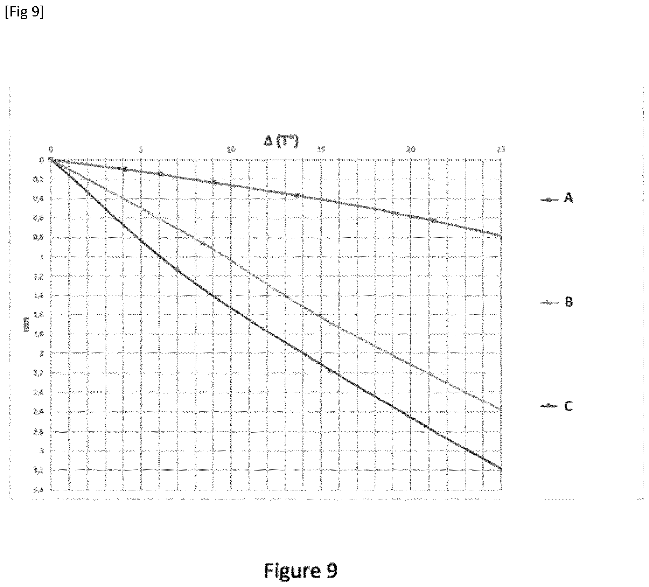

[Fig 9] est un graphique présentant une comparaison de la dilatation du maillon en fonction de la température entre l'art antérieur et deux modes de réalisation l'invention.

### Description détaillée de modes de réalisation de l'invention

Le principe général de l'invention repose sur la mise en oeuvre d'un robot cartésien comprenant au moins un maillon bi-matière, combinant une partie en aluminium assurant notamment des fonctions de maintien et/ou de guidage et une partie en acier assurant la rigidité, dont au moins l'une d'entre elles présente des déformations.

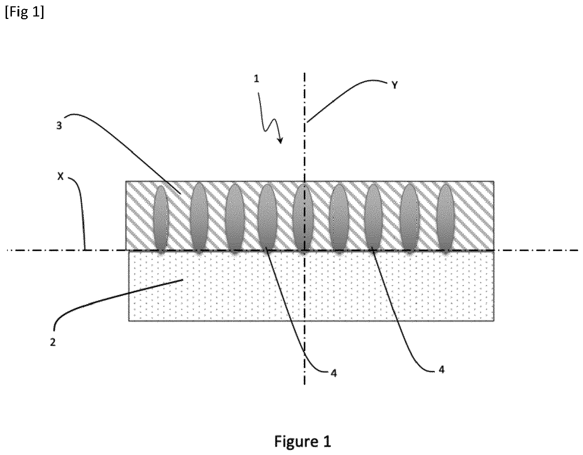

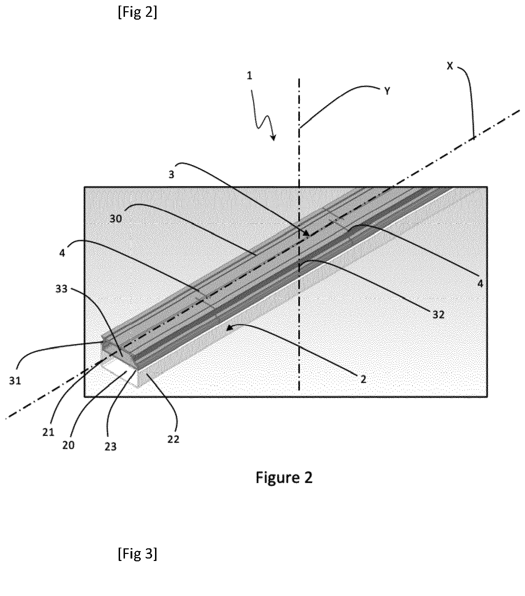

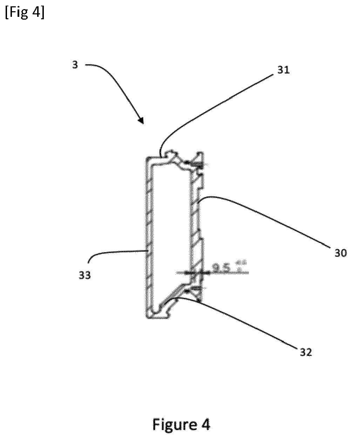

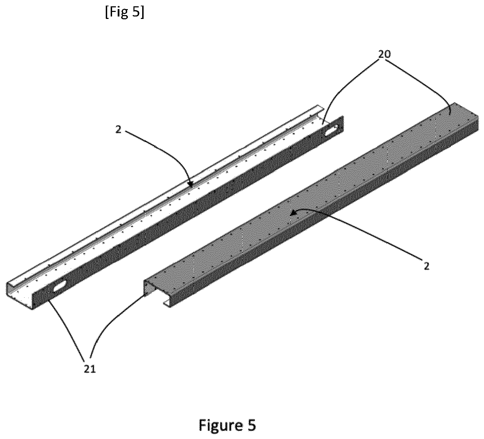

On présente maintenant, en relation avec les figures 1 à 8, différents modes de réalisation de maillons pour un tel robot cartésien.

Il est à noter qu'un tel robot cartésien multiaxe peut comprendre un ou plusieurs maillons selon l'un ou l'autre des modes de réalisation de l'invention. Un tel robot cartésien multiaxe pourrait également comprendre plusieurs maillons faits selon plusieurs modes de réalisation différents de l'invention.

Comme illustré sur ces différentes figures, le maillon 1, 1' est constitué d'au moins deux éléments réalisés dans deux matériaux différents et solidarisés l'un à l'autre :
- un élément de rigidification 2, 2', réalisé à partir d'une tôle d'acier pliée ; et
- un élément de maintien et/ou de guidage 3, 3', réalisé à partir d'un profilé en aluminium extrudé.

Dans les deux modes de réalisation présentés, ces deux éléments 2, 2', 3, 3' sont assemblés selon un axe principal Y (par exemple vertical) et sont solidarisés l'un à l'autre, de sorte que l'élément de rigidification et l'élément de maintien et/ou de guidage ne présentent pas de degré de liberté l'un par rapport à l'autre. Ces deux éléments s'étendent selon une direction X, qui est ici une direction longitudinale (par exemple horizontale), qui est perpendiculaire à l'axe principal Y.

Selon l'invention, au moins un des deux éléments 2, 2', 3, 3' présente une pluralité de déformations 4, 4' locales permettant une dilatation ou une contraction d'une ou plusieurs portions de l'un des éléments par rapport à l'autre, lorsque la température varie.

En d'autres termes, au moins un des deux éléments 2, 2', 3, 3' présente une pluralité de déformations 4, 4' locales permettant un glissement relatif d'une ou plusieurs portions de l'un des éléments par rapport à l'autre, sous l'effet d'un changement de température.

Le glissement relatif, c'est-à-dire la dilatation ou la contraction de l'un des éléments par rapport à l'autre due à la variation de la température, lorsque la température varie, permet l'annulation des contraintes exercées par celui des éléments sur l'autre, et ce même si ces deux éléments 2, 2', 3, 3' sont fixés l'un à l'autre sans degré de liberté de mouvement restant.

Ici, dans les deux modes de réalisation présentés, les déformations 4, 4' s'étendent sensiblement perpendiculairement à l'axe principal Y des éléments. En d'autres termes, les déformations 4, 4' s'étendent sensiblement selon l'axe longitudinal X qui est perpendiculaire à l'axe principal Y.

Toutefois, on pourrait prévoir des modes de réalisation dans lesquels les déformations ne s'étendraient pas perpendiculairement à cet axe principal Y.

Selon les modes de réalisation, les déformations peuvent par exemple comprendre des encoches ou des entailles.

Toutefois, on pourrait prévoir des modes de réalisation dans lesquels ces déformations présenteraient une autre forme.

Par exemple, on pourrait prévoir un mode de réalisation dans lequel ces déformations prennent la forme de rainures ménagées sur au moins un côté d'au moins un des deux éléments.

On pourrait également prévoir un mode de réalisation dans lequel les déformations prendraient la forme de trous oblongs.

On pourrait également prévoir des modes de réalisation dans lesquels les déformations sont des encoches présentant une section de forme appartenant au groupe comprenant :
- une forme rectangulaire ;
- une forme circulaire ;
- une forme ovale ;
- une forme trapézoïdale.

On présente maintenant, en relation avec les figures 1 à 6, un premier mode de réalisation de l'invention.

Comme illustré, le maillon 1 est constitué de deux éléments réalisés dans deux matériaux différents et solidarisés l'un à l'autre :
- un élément de rigidification 2 réalisé à partir d'une tôle d'acier pliée ; et
- un élément de maintien et/ou de guidage 3, réalisé à partir d'un profilé en aluminium extrudé.

L'élément de maintien et/ou de guidage 3 est un profilé en aluminium extrudé, dont la forme est adaptée pour assurer les fonctions requises.

Quant à l'élément de rigidification 2, il présente dans ce mode de réalisation une section ouverte, avec :
- une surface de fond 20 ;
- une première surface latérale 21, perpendiculaire à la surface de fond 20, dont la partie supérieure vient en contact avec une première surface 31 correspondante de l'élément de maintien et/ou de guidage 3 (qui correspond ici à un bord de cet élément de maintien et/ou de guidage) ;
- une deuxième surface latérale 22, perpendiculaire à la surface de fond 20 ;
- une surface supérieure 23 repliée à partir de la deuxième surface latérale 22 et s'étendant parallèlement à la surface de fond 20, et venant en contact avec une seconde surface 33 correspondante dudit élément de maintien et/ou de guidage 3.

Dans ce mode de réalisation, les déformations 4 sont formées sur l'élément de maintien et/ou de guidage 3.

On pourrait également prévoir une variante dans laquelle seules certaines des déformations sont formées sur cet élément de maintien et/ou de guidage.

Ici, les déformations 4 présentent une forme d'entaille, ou d'encoche, qui s'étendent sur les deux bords 31, 32 et la surface supérieure 30 de l'élément de maintien et de guidage 3.

Plus particulièrement, certaines des encoches s'étendent sur le bord 31, la surface supérieure 30, et l'angle de l'élément de maintien et/ou de guidage 3 entre ce bord 31 et la surface supérieure 30. Ensuite, d'autres encoches s'étendent sur le bord 32, la surface supérieure 30, et l'angle de l'élément de maintien et/ou de guidage 3 entre ce bord 32 et la surface supérieure 30.

De cette manière, cet élément de maintien et/ou de guidage 3 présente deux séries de déformations, distribuées respectivement sur chacun des deux côtés 31, 32 de cet élément.

Ici, les deux séries de déformations sont sensiblement identiques et régulièrement espacées sur la longueur de l'élément de maintien et/ou de guidage.

Toutefois, on pourrait prévoir des modes de réalisation dans lesquels les deux séries de déformations ne seraient pas identiques.

Par ailleurs, on pourrait prévoir des modes de réalisation dans lesquels les déformations ne seraient pas régulièrement espacées.

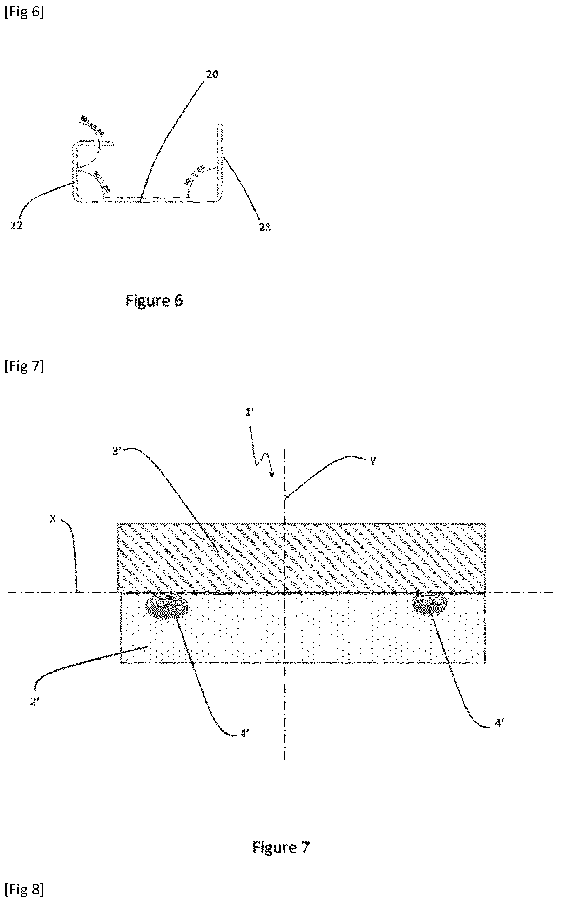

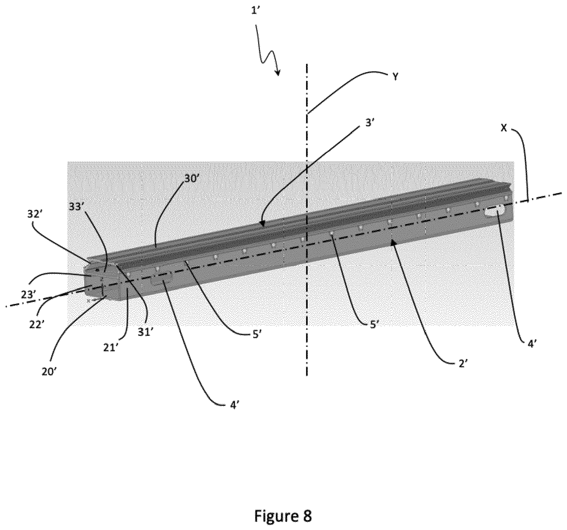

On présente maintenant, en relation avec les figures 7 et 8, un deuxième mode de réalisation de l'invention.

Comme illustré sur ces figures, le maillon 1' est constitué de deux éléments réalisés dans deux matériaux différents et solidarisés l'un à l'autre :
- un élément de rigidification 2' réalisé à partir d'une tôle d'acier pliée ; et
- un élément de maintien et/ou de guidage 3', réalisé à partir d'un profilé en aluminium extrudé.

L'élément de maintien et/ou de guidage 3 est similaire à celui du premier mode de réalisation hormis le fait qu'il ne présente pas de déformations.

En ce qui concerne l'élément de rigidification 2, il présente dans ce mode de réalisation une section ouverte, avec :
- une surface de fond 20' ;
- une première surface latérale 21', perpendiculaire à la surface de fond 20', dont la partie supérieure vient en contact avec une première surface 31' correspondante de l'élément de maintien et/ou de guidage 3' (qui correspond également ici à un bord de cet élément de maintien et/ou de guidage) ;
- une deuxième surface latérale 22', perpendiculaire à la surface de fond 20' ;
- une surface supérieure 23' repliée à partir de la deuxième surface latérale 22' et s'étendant parallèlement à la surface de fond 20', et venant en contact avec une seconde surface 33' correspondante dudit élément de maintien et/ou de guidage 3'.

Dans ce mode de réalisation, les déformations 4' sont ménagées sur l'élément de rigidification 2'. Elles sont ménagées sous la forme de deux trous oblongs ménagés de part et d'autre de l'élément de rigidification 2'.

Plus particulièrement, ici, ces déformations 4' sont distribuées à proximité de lumières 5' destinées au passage de vis de solidarisation des deux éléments.

Plus particulièrement encore, et comme visible notamment sur la figure 7, ces déformations 4' sont formées sur la partie supérieure de la deuxième surface latérale.

On pourrait toutefois prévoir un mode de réalisation dans lequel les déformations seraient formées sur la partie supérieure de la première surface latérale.

On pourrait en outre prévoir un mode de réalisation dans lequel les déformations seraient formées sur les parties supérieures des deux surfaces latérales.

On pourrait en outre prévoir un mode de réalisation dans lequel il y a plus de deux déformations.

On présente, en relation avec la figure 7, un graphique montrant une comparaison de la dilatation thermique (fléchissement en fonction de la variation de température) d'un maillon selon l'art antérieur par rapport à la dilatation thermique de deux modes de réalisations selon l'invention.

Cette étude de la dilatation thermique a été faite sur des maillons comprenant un élément de rigidification en acier et un élément de maintien et/ou de guidage en aluminium. Plus particulièrement, pour ces maillons, l'élément de maintien et/ou de guidage et l'élément de rigidification présentent chacun une longueur de 3265mm pour une largeur de 275mm et une hauteur de 210mm.

La courbe C illustre le fléchissement d'un maillon bi-matière, selon les recherches envisagées par les inventeurs, avec un élément de maintien et/ou de guidage et l'élément de rigidification présentent chacun une longueur de 3265mm pour une largeur de 275mm et une hauteur de 210mm.

Malgré cette approche bi-matière, on constate un fléchissement relativement important, notamment de 1,1mm pour 7 degrés, de 2mm pour 14 degrés, et de 3,2mm pour 25 degrés.

La courbe B présente la dilatation d'un maillon bi-matière, présentant en outre des encoches, formées dans l'élément de rigidification en acier. La dilatation en fonction du différentiel de la température montre qu'un tel maillon présente une dilatation de 0,7mm pour 7 degrés, de 1,6mm pour 15 degrés, et de 2,6mm pour 25 degrés. On constate que le fléchissement est réduit, par rapport au maillon de la courbe B.

La courbe A illustre la dilatation d'un maillon mis en oeuvre selon un mode de réalisation dans lequel l'élément de maintien et/ou de guidage en aluminium présente des déformations. Dans ce mode de réalisation, l'élément de maintien et/ou de guidage et l'élément de rigidification présentent chacun une longueur de 3265mm pour une largeur de 275mm et une hauteur de 210mm. Les déformations sont formées sur l'élément de maintien et/ou de guidage et sont ménagées des deux côtés. Plus précisément, pour un côté, les déformations sont espacées de 1000mm et sont décalées de 70mm par rapport aux déformations de l'autre côté. Elles sont donc formées par « couple de déformations » chacune placée d'un côté et de l'autre et espacées entre elles de 70mm, tandis que deux déformations d'un même côté sont espacées de 1000mm, Ces déformations ont ici une longueur de 185mm et une largeur de 1,5mm. Elles s'étendent chacune sur trois faces de l'élément de maintien et/ou de guidage.

Comme visible sur la figure 7, la courbe A de dilatation en fonction du différentiel de la température montre qu'un tel présente une dilatation (ici un fléchissement) de 0,2mm pour 7 degrés, de 0,4mm pour 15 degrés, et de 0,8mm pour 25 degrés.

Ainsi, la courbe de la dilatation en fonction du différentiel de la température montre qu'un maillon selon le mode de réalisation de l'invention, selon lequel on a mis en oeuvre une approche bi-matière, mais également des encoches formées dans l'élément en aluminium permet d'obtenir ainsi un fléchissement encore plus faible.

On peut donc constater que les différents modes de réalisation de l'invention permettent de limiter efficacement la dilatation thermique d'un maillon.

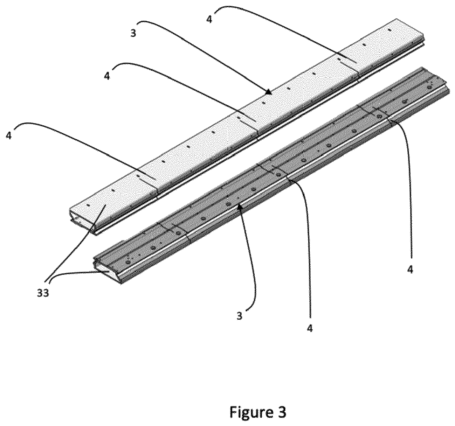

Les figures 3 à 6 illustrent les éléments du maillon utilisé pour obtenir la courbe A. Comme déjà décrit, les dimensions principales sont les suivantes :
- élément de maintien et/ou de guidage : longueur de 3265mm pour une largeur de 275mm et une hauteur de 210mm
- élément de rigidification : longueur de 3265mm pour une largeur de 275mm et une hauteur de 210mm, avec une première surface latérale 21' présentant une hauteur 210mm une deuxième surface latérale 22' présentant une hauteur de 115mm.

Il est à noter que, comme visible sur la figure 6, l'élément de rigidification ne présente pas de bourrelet de matière au niveau des angles entre la surface de fond et les première et deuxième surfaces latérales.

Les déformations, ici des encoches sont formées sur l'élément de maintien et/ou de guidage 3 et sont ménagées des deux côtés. Plus précisément, pour un côté, les déformations sont espacées de 1000mm et sont décalées de 70mm par rapport aux déformations de l'autre côté. Elles sont donc formées par « couple de déformations » chacune placée d'un côté et de l'autre et espacées entre elles de 70mm, tandis que deux déformations d'un même côté sont espacées de 1000mm, Ces déformations ont ici une longueur de 1,5mm et une largeur de 185mm.

Elles s'étendent chacune sur trois faces de l'élément de maintien et/ou de guidage. Plus particulièrement, elles s'étendent chacune au niveau de la surface supérieure 30 et de la seconde surface 33, et s'étendent chacune sur l'un des deux bords 31, 32.

De ce fait, chaque « couple de déformations » comprend une déformation s'étendant sur le bord 31 espacé de 70mm d'une déformation s'étendant sur le bord 32.

En complément, le maillon peut également comprendre un élément de suppression ou de réduction d'une déformation du maillon en cas de variation de la température, réalisé dans un premier des matériaux (acier ou aluminium respectivement) et s'étendant parallèlement aux éléments de rigidification et de maintien et/ou de guidage, et solidarisé à l'élément réalisé dans le second des matériaux (aluminium ou acier respectivement), de façon que ce dernier, ou au moins une surface de ce dernier, soit placé entre deux éléments réalisés dans le premier matériau (acier ou aluminium respectivement).

Notamment, l'élément de maintien et/ou de guidage en aluminium peut définir un logement intérieur, dans lequel est inséré ledit élément de suppression ou de réduction d'une déformation, réalisé en acier.

Ceci permet de réduire simplement et efficacement des effets de dilatation de l'élément de maintien et/ou de guidage réalisé à partir d'un profilé en aluminium extrudé, à l'aide d'une forme simple en acier, et sans augmenter le volume global du maillon.

Dans ce cas, ledit élément de maintien et/ou de guidage peut présenter, dans un mode de réalisation, une portion plane présentant deux faces, une face inférieure en contact avec ledit élément de rigidification et une face supérieure en contact avec ledit élément de suppression ou de réduction d'une déformation.

Selon différentes variantes, un tel élément de suppression ou de réduction d'une déformation présente une section de forme appartenant au groupe comprenant :
- une forme rectangulaire ;
- une forme circulaire ;
- une forme ovale ;
- une forme trapézoïdale.

L'élément de rigidification en acier peut également porter, sur sa partie supérieure, l'élément de maintien et/ou de guidage et, sur sa partie inférieure, au moins un élément de suppression ou de réduction d'une déformation, réalisé en aluminium.

Dans une variante, la partie inférieure de l'élément de rigidification peut porter deux éléments de suppression ou de réduction d'une déformation, formant chacun un barreau réalisé en aluminium.

Une telle mise en oeuvre permet de fournir un maillon qui soit relativement peu coûteux du fait que le ou les éléments de suppression ou de réduction d'une déformation sont réduits et de forme simple.

Dans différents modes de réalisation, l'élément de rigidification peut par exemple présenter une section ouverte, avec :
- une surface de fond venant au contact dudit au moins un élément de suppression ou de réduction d'une déformation ;
- une première surface latérale, perpendiculaire à ladite surface de fond, dont la partie supérieure vient en contact avec une première surface correspondante dudit élément de maintien et/ou de guidage ;
- une deuxième surface latérale, perpendiculaire à ladite surface de fond ;
- une surface supérieure repliée à partir de ladite deuxième surface latérale et s'étendant parallèlement à ladite surface de fond, et venant en contact avec une seconde surface correspondante dudit élément de maintien et/ou de guidage.

Une telle combinaison de déformations et d'un élément supplémentaire de suppression ou de réduction d'une déformation du maillon en fonction des variations de température permet, en cas de besoin, de renforcer la lutte contre l'effet bilame.

## Revendications

1. Robot cartésien multiaxes comprenant au moins un maillon (1, 1'), **caractérisé en ce que** ledit maillon (1, 1') est constitué d'au moins deux éléments réalisés dans deux matériaux différents et solidarisés l'un à l'autre :
- un élément de rigidification (2, 2'), réalisé à partir d'une tôle d'acier pliée ; et
- un élément de maintien et/ou de guidage (3, 3'), réalisé à partir d'un profilé en aluminium extrudé,
et **en ce que** l'élément de rigidification et l'élément de maintien et/ou de guidage sont solidarisés l'un à l'autre en liaison encastrement à température constante, au moins un desdits éléments (2, 2', 3, 3') présentant une pluralité de déformations (4, 4') locales permettant une dilatation ou une contraction d'une ou plusieurs portions de l'un desdits éléments par rapport à l'autre, lorsque la température varie.

2. Robot cartésien selon la revendication 1, **caractérisé en ce que** lesdits deux éléments (2, 2', 3, 3') sont assemblés selon un axe principal (Y), lesdites déformations (4, 4') s'étendant sensiblement perpendiculairement audit axe principal (Y) desdits éléments.

3. Robot cartésien selon l'une des revendications 1 ou 2, **caractérisé en ce que** lesdites déformations (4, 4') comprennent des encoches ou des entailles.

4. Robot cartésien selon l'une quelconque des revendications 1 à 3, **caractérisé en ce qu'**au moins certaines desdites déformations (4) sont formées sur ledit élément de maintien et/ou de guidage (3).

5. Robot cartésien selon les revendications 3 et 4, **caractérisé en ce que** lesdites entailles ou encoches (4) s'étendent sur au moins deux bords (31, 32) et un angle dudit élément de maintien et/ou de guidage (3).

6. Robot cartésien selon la revendication 5, **caractérisé en ce que** ledit élément de maintien et/ou de guidage présente deux séries de déformations, distribuées respectivement sur chacun des deux côtés (31, 32) dudit élément.

7. Robot cartésien selon l'une quelconque des revendications 1 à 6, **caractérisé en ce qu'**au moins certaines desdites déformations (4') sont formées sur ledit élément de rigidification (2').

8. Robot cartésien selon les revendications 3 et 7, **caractérisé en ce que** lesdites entailles ou encoches (4') sont distribuées à proximité de lumières destinées au passage de vis de solidarisation des deux éléments.

9. Robot cartésien selon l'une quelconque des revendications précédentes, **caractérisé en ce que** ledit élément de rigidification (2, 2') présente une section ouverte, avec :
- une surface de fond (20, 20') ;
- une première surface latérale (21, 21'), perpendiculaire à ladite surface de fond (20, 20'), dont la partie supérieure vient en contact avec une première surface (31, 31') correspondante dudit élément de maintien et/ou de guidage (3, 3') ;
- une deuxième surface latérale (22, 22'), perpendiculaire à ladite surface de fond (20, 20') ;
- une surface supérieure (23, 23') repliée à partir de ladite deuxième surface latérale (22, 22') et s'étendant parallèlement à ladite surface de fond (20, 20'), et venant en contact avec une seconde surface (33, 33') correspondante dudit élément de maintien et/ou de guidage (3, 3').

10. Robot cartésien selon la revendication précédente, **caractérisé en ce que** lesdites déformations sont formées au moins sur ladite partie supérieure de la première surface latérale.

11. Maillon (1, 1') d'un robot cartésien selon l'une quelconque des revendications 1 à 10, **caractérisé en ce qu'**il est constitué d'au moins deux éléments réalisés dans deux matériaux différents et solidarisés l'un à l'autre :
- un élément de rigidification (2, 2'), réalisé à partir d'une tôle d'acier pliée ; et
- un élément de maintien et/ou de guidage (3, 3'), réalisé à partir d'un profilé en aluminium extrudé,
et **en ce que** l'élément de rigidification et l'élément de maintien et/ou de guidage sont solidarisés l'un à l'autre en liaison encastrement à température constante, au moins un desdits éléments (2, 2', 3, 3') présentant une pluralité de déformations (4, 4') locales permettant une dilatation ou une contraction d'une ou plusieurs portions de l'un desdits éléments par rapport à l'autre, lorsque la température varie.

## Patentansprüche

1. Kartesischer Mehrachsroboter, umfassend mindestens ein Kettenglied (1, 1'),
**dadurch gekennzeichnet, dass** das Kettenglied (1, 1') aus mindestens zwei Elementen gebildet ist, die aus zwei verschiedenen Materialien gebildet und miteinander fest verbunden sind:
- einem Versteifungselement (2, 2'), das aus einem gebogenen Stahlblech hergestellt ist; und
- einem Halte- und/oder Führungselement (3, 3'), das aus einem Aluminium-Strangpressprofil hergestellt ist,
und dadurch, dass das Versteifungselement und das Halte- und/oder Führungselement in einer Steckverbindung bei konstanter Temperatur miteinander fest verbunden sind, wobei mindestens eines der Elemente (2, 2', 3, 3') mehrere lokale Verformungen (4, 4') aufweist, die eine Ausdehnung oder eine Schrumpfung eines oder mehrerer Abschnitte von einem der Elemente gegenüber dem anderen ermöglichen, wenn sich die Temperatur ändert.

2. Kartesischer Roboter nach Anspruch 1, **dadurch gekennzeichnet, dass** die zwei Elemente (2, 2', 3, 3') entlang einer Hauptachse (Y) zusammengesetzt sind, wobei sich die Verformungen (4, 4') im Wesentlichen senkrecht zu der Hauptachse (Y) der Elemente erstrecken.

3. Kartesischer Roboter nach einem der Ansprüche 1 oder 2, **dadurch gekennzeichnet, dass** die Verformungen (4, 4') Kerben oder Einschnitte aufweisen.

4. Kartesischer Roboter nach einem der Ansprüche 1 bis 3, **dadurch gekennzeichnet, dass** mindestens einige der Verformungen (4) an dem Halte- und/oder Führungselemente (3) ausgebildet sind.

5. Kartesischer Roboter nach einem der Ansprüche 3 und 4, **dadurch gekennzeichnet, dass** sich die Kerben oder Einschnitte (4) über mindestens zwei Kanten (31, 32) und einen Winkel des Halte- und/oder Führungselements (3) erstrecken.

6. Kartesischer Roboter nach Anspruch 5, **dadurch gekennzeichnet, dass** das Halte- und/oder Führungselement zwei Reihen von Verformungen aufweist, die jeweils auf jeder der zwei Seiten (31, 32) des Elements verteilt sind.

7. Kartesischer Roboter nach einem der Ansprüche 1 bis 6, **dadurch gekennzeichnet, dass** mindestens einige der Verformungen (4') an dem Versteifungselement (2') ausgebildet sind.

8. Kartesischer Roboter nach den Ansprüchen 3 und 7, **dadurch gekennzeichnet, dass** die Kerben oder Einschnitte (4') in der Nähe von Öffnungen verteilt sind, die für den Durchgang von Befestigungsschrauben der zwei Elemente bestimmt sind.

9. Kartesischer Roboter nach einem der vorhergehenden Ansprüche, **dadurch gekennzeichnet, dass** das Versteifungselement (2, 2') einen offenen Querschnitt aufweist mit:
- einer Bodenfläche (20, 20');
- einer ersten Seitenfläche (21, 21'), die senkrecht zu der Bodenfläche (20, 20') ist, deren oberer Teil mit einer entsprechenden ersten Fläche (31, 31') des Halte- und/oder Führungselements (3, 3') in Kontakt kommt;
- einer zweiten Seitenfläche (22, 22'), die senkrecht zu der Bodenfläche (20, 20') ist;
- einer oberen Fläche (23, 23'), die ausgehend von der zweiten Seitenfläche (22, 22') umgebogen ist und sich parallel zu der Bodenfläche (20, 20') erstreckt, und mit einer entsprechenden zweiten Fläche (33, 33') des Halte- und/oder Führungselements (3, 3') in Kontakt kommt.

10. Kartesischer Roboter nach dem vorhergehenden Anspruch, **dadurch gekennzeichnet, dass** die Verformungen mindestens auf dem oberen Teil der ersten Seitenfläche gebildet sind.

11. Kettenglied (1, 1') eines kartesischen Roboters nach einem der Ansprüche 1 bis 10, **dadurch gekennzeichnet, dass** es aus mindestens zwei Elementen besteht, die aus zwei verschiedenen Materialien gebildet und miteinander fest verbunden sind:
- einem Versteifungselement (2, 2'), das aus einem gebogenen Stahlblech hergestellt ist; und
- einem Halte- und/oder Führungselement (3, 3'), das aus einem Aluminium-Strangpressprofil hergestellt ist,
und dadurch, dass das Versteifungselement und das Halte- und/oder Führungselement in einer Steckverbindung bei konstanter Temperatur miteinander fest verbunden sind, wobei mindestens eines der Elemente (2, 2', 3, 3') mehrere lokale Verformungen (4, 4') aufweist, die eine Ausdehnung oder eine Schrumpfung eines oder mehrerer Abschnitte von einem der Elemente gegenüber dem anderen ermöglichen, wenn sich die Temperatur ändert.

## Claims

1. A multiaxial cartesian robot comprising at least one link (1, 1'), **characterised in that** said link (1, 1') is comprised of at least two elements made of two different materials and integrally joined to one another:
- a stiffening element (2, 2'), made from a bent sheet of steel; and
- a holding and/or guiding element (3, 3'), made from an extruded aluminium profile,
and **in that** the stiffening element and the holding and/or guiding element are integrally joined to one another as an embedded link at constant temperature, at least one of said elements (2, 2', 3, 3') having a plurality of local deformations (4, 4') enabling an expansion or a contraction of one or more portions of one of said elements relative to the other, when the temperature varies.

2. The cartesian robot according to claim 1, **characterised in that** said two elements (2, 2', 3, 3') are assembled along a main axis (Y), said deformations (4, 4') extending substantially perpendicular to said main axis (Y) of said elements.

3. The cartesian robot according to one of claims 1 or 2, **characterised in that** said deformations (4, 4') comprise notches or grooves.

4. The cartesian robot according to any one of claims 1 to 3, **characterised in that** at least some of said deformations (4) are formed on said holding and/or guiding element (3).

5. The cartesian robot according to claims 3 and 4, **characterised in that** said grooves or notches (4) extend on at least two edges (31, 32) and a corner of said holding and/or guiding element (3).

6. The cartesian robot according to claim 5, **characterised in that** said holding and/or guiding element has two series of deformations, respectively distributed on each of the two sides (31, 32) of said element.

7. The cartesian robot according to any one of claims 1 to 6, **characterised in that** at least some of said deformations (4') are formed on said stiffening element (2').

8. The cartesian robot according to claims 3 and 7, **characterised in that** said grooves or notches (4') are distributed proximate to holes intended for the passage of screws for integrally joining the two elements.

9. The cartesian robot according to any one of the preceding claims, **characterised in that** said stiffening element (2, 2') has an open section, with:
- a bottom surface (20, 20');
- a first lateral surface (21, 21'), perpendicular to said bottom surface (20, 20'), the upper part of which comes into contact with a corresponding first surface (31, 31') of said holding and/or guiding element (3, 3');
- a second lateral surface (22, 22'), perpendicular to said bottom surface (20, 20');
- an upper surface (23, 23') folded from said second lateral surface (22, 22') and extending parallel to said bottom surface (20, 20'), and coming into contact with a corresponding second surface (33, 33') of said holding and/or guiding element (3, 3').

10. The cartesian robot according to the preceding claim, **characterised in that** said deformations are formed on at least said upper part of the first lateral surface.

11. A link (1, 1') of a cartesian robot according to any one of claims 1 to 10,
**characterised in that** it is comprised of at least two elements made of two different materials and integrally joined to one another:
- a stiffening element (2, 2'), made from a bent sheet of steel; and
- a holding and/or guiding element (3, 3'), made from an extruded aluminium profile,
and **in that** the stiffening element and the holding and/or guiding element are integrally joined to one another as an embedded link at constant temperature, at least one of said elements (2, 2', 3, 3') having a plurality of local deformations (4, 4') enabling an expansion or a contraction of one or more portions of one of said elements relative to the other, when the temperature varies.
